(19) Europäisches Patentamt
European Patent Office
Office européen des brevets

(11) **EP 4 394 532 A1**

(12) **EUROPEAN PATENT APPLICATION**
published in accordance with Art. 153(4) EPC

(43) Date of publication:
**03.07.2024  Bulletin 2024/27**

(21) Application number: **21958316.8**

(22) Date of filing: **21.09.2021**

(51) International Patent Classification (IPC):
**G05B 19/19** (2006.01)

(52) Cooperative Patent Classification (CPC):
**G05B 19/19**

(86) International application number:
**PCT/JP2021/034491**

(87) International publication number:
**WO 2023/047438 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: DMG Mori Co., Ltd.
**Yamatokoriyama-shi, Nara 639-1160 (JP)**

(72) Inventor: **NISHIKI, Takahiro**
**Yamatokoriyama-shi, Nara 639-1160 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **MACHINE TOOL**

(57)     A controller (20) of a machine tool (1) checks data on the inertia of a rotary body (15, 16) when rotating the rotary body (15, 16) in accordance with a machining program. When the data on the inertia of the rotary body (15, 16) has been set, the controller (20) checks whether or not a rotation speed of the rotary body (15, 16) specified by the machining program is equal to or lower than a limit rotation speed set according to the inertia of the rotary body (15, 16). When the rotation speed of the rotary body (15, 16) specified by the machining program exceeds the limit rotation speed, the controller (20) limits the rotation speed of the rotary body (15, 16) specified by the machining program using as an allowable rotation speed a preset rotation speed equal to or lower than the limit rotation speed.

*FIG. 2*

EP 4 394 532 A1

**Description**

Technical Field

0001 The present invention relates to a machine tool that has a motion mechanism unit including a rotary body and has a controller controlling at least a rotating operation of the rotary body in accordance with a machining program.

Background Art

0002 In the field of machine tools, a motor is used to rotate a workpiece or a tool that is a rotary body. Such a motor is connected to the rotary body to drive the rotary body. The operation of the motor is controlled by a controller.

0003 Such a machine tool conventionally includes a circuit called "dynamic braking circuit" that is used to carry out emergency stopping of the motor when the motor rotating becomes uncontrollable due to power outage or any other cause. Japanese Patent No. 6285477 (Patent Literature 1 listed below) discloses a motor driving device that is a known conventional example of a device including such a dynamic braking circuit.

0004 The disclosed motor driving device consists of: an inverter driving a motor; a rotation speed obtaining unit obtaining a rotation speed of the motor; an inertia information storage storing information on the inertia of the motor; a rotational energy calculating unit calculating a rotational energy of the motor based on the rotation speed and inertia of the motor; a dynamic braking circuit generating a deceleration torque through dynamic braking of the motor in emergency stopping of the motor; a tolerance information storage storing information on the tolerance of a resistance in the dynamic braking circuit; a power element operating unit turning on a power element of one of upper and lower arms and turning off a power element of the other of the upper and lower arms in the emergency stopping of the motor; a dynamic braking circuit operating unit operating a switch of the dynamic braking circuit; and a tolerance comparing unit comparing the rotational energy of the motor with the tolerance of the dynamic braking circuit.

0005 The dynamic braking circuit operating unit actuates the dynamic braking circuit when the rotational energy of the motor does not exceed the tolerance of the dynamic braking circuit, while the dynamic braking circuit operating unit does not actuate the dynamic braking circuit when the rotational energy of the motor exceeds the tolerance of the dynamic braking circuit. When the rotational energy of the motor exceeds the tolerance of the dynamic braking circuit, the dynamic braking circuit operating unit causes the motor to idle for a while. Thereby, the rotation speed of the motor is reduced. After the rotational energy of the motor reaches or falls below the tolerance of the dynamic braking circuit, the dynamic braking circuit operating unit actuates the dynamic braking circuit.

0006 Thus, this conventional motor driving device avoids damage to the dynamic braking circuit through the dynamic braking circuit operating unit that operates in the above-described manner.

Citation List

Patent Literature

0007 Patent Literature 1: Japanese Patent No. 6285477

Summary of Invention

Technical Problem

0008 As described above, in the event that the motor in operation becomes uncontrollable due to power outage or any other cause, this conventional motor driving device is configured to carry out emergency stopping of the motor as follows: when the rotational energy of the motor does not exceed the tolerance of the emergency stop circuit, the motor driving device stops the motor through the emergency stop circuit; and when the rotational energy of the motor exceeds the tolerance of the emergency stop circuit, the motor driving device actuates the emergency stop circuit after reducing the rotational energy of the motor to the tolerance of the emergency stop circuit or less by causing the motor to idle for a while.

0009 When the rotation speed of the motor is set at a high speed, there is the concern as described above, that is to say, the rotation speed of the motor may exceed the tolerance of the emergency stop circuit operating in the emergency stopping. Besides this concern, if the rotary body has a large inertia, a large load is applied to the motor in accelerating and decelerating the rotary body. This is not preferable.

0010 Machining in an NC machine tool uses an NC program. This NC program is created by an operator or automatically created by an automatic programming device. In the creation, the rotation speed of the motor used for the tool spindle or the workpiece spindle is determined based on various factors related to the machining conditions, such as tool material, workpiece material, and machining accuracy; however, the inertia of the rotary body including the motor has not been taken into consideration.

0011 Accordingly, a conventional machine tool has the possibility that a rotation speed of the motor set in machining exceeds the tolerance of the emergency stop circuit for emergency stopping of the motor; therefore, the measures as described above need to be taken.

0012 The present invention has been achieved in view of the above-described circumstances, and an object of the invention is to provide a machine tool capable of performing machining with a motor at a rotation speed not exceeding an allowable rotation speed corresponding to the inertia of a rotary body, even when a rotation speed of the motor commanded by an NC program exceeds the allowable rotation speed. Solution to Problem

0013 To solve the above-described problem, the present invention provides a machine tool including:

a motion mechanism unit that includes a rotary body to be controlled; and
a controller that controls at least a rotating operation of the rotary body in accordance with a machining program, wherein
the controller is configured to: check data on an inertia of the rotary body when rotating the rotary body in accordance with the machining program; when the data on the inertia of the rotary body has been set, check whether or not a rotation speed of the rotary body specified by the machining program is equal to or lower than a limit rotation speed set according to the inertia of the rotary body; and when the rotation speed of the rotary body specified by the machining program exceeds the limit rotation speed, limit the rotation speed of the rotary body specified by the machining program using as an allowable rotation speed a preset rotation speed equal to or lower than the limit rotation speed.

0014 In the machine tool according to the present invention, the controller checks data on the inertia of the rotary body when rotating the rotary body in accordance with a machining program. For example, the controller checks the data on the inertia of the rotary body by referring to a storage provided to store the data. When the data on the inertia of the rotary body has been set, the controller checks whether or not a rotation speed of the rotary body specified by the machining program is equal to or lower than a limit rotation speed that is set according to the inertia of the rotary body. When the rotation speed of the rotary body specified by the machining program exceeds the limit rotation speed, the controller limits the rotation speed of the rotary body specified by the machining program using as an allowable rotation speed a preset rotation speed equal to or lower than the limit rotation speed.

0015 Thus, the machine tool according to the present invention is configured such that, when a rotation speed of the rotary body specified by the machining program exceeds the limit rotation speed that is set according to the inertia of the rotary body, the rotation speed of the rotary body is limited to the allowable rotation speed that is equal to or lower than the limit rotation speed. Consequently, a motor driving the rotary body is safely stopped by an appropriately provided emergency stop device in the event that the motor becomes uncontrollable due to power outage or any other cause. Besides, excessive loading on the motor in driving and stopping the rotary body is avoided.

0016 Note that the rotary body includes the motor, a workpiece to be rotated by the motor, and other jigs.

0017 The machine tool may be configured according to the following aspect: the controller is configured to: confirm whether or not an operator accepts the allowable rotation speed; when the operator accepts the allowable rotation speed, continue machining by limiting the rotation speed of the rotary body specified by the machining program to the allowable rotation speed; and when the operator does not accept the allowable rotation speed, stop the machining.

0018 Performing the machining with the allowable rotation speed may not achieve a required machining accuracy, such as in surface roughness. Therefore, confirming with the operator whether or not the machining can be performed with the allowable rotation speed will prevent a machined product from being defective.

0019 The machine tool may be configured according to the following aspect: the controller is configured to, when the data on the inertia of the rotary body has not been set or when the set data on the inertia of the rotary body is determined to be an abnormal value, limit the rotation speed of the rotary body specified by the machining program to a preset safe rotation speed.

0020 When the inertia of the rotary body has not been set or when the inertia of the rotary body has been set but the data on the inertia is determined to be an abnormal value, the limit rotation speed for the rotary body cannot be recognized. Therefore, it is not possible to determine whether or not the rotation speed of the rotary body specified by the machining program is an appropriate rotation speed which allows the emergency stopping to be performed.

0021 In such a case, limiting the rotation speed of the rotary body to the safe rotation speed that has a sufficient margin such that the motor driving the rotary body is safely stopped by the appropriately provided emergency stop device in the event that the motor becomes uncontrollable due to power outage or any other cause will allow the emergency stopping of the rotary body to be safely carried out. Besides, excessive loading on the motor in driving and stopping the rotary body is avoided.

0022 In this aspect, the controller may be configured to: confirm whether or not the operator accepts the safe rotation speed; when the operator accepts the safe rotation speed, continue the machining by limiting the rotation speed of the rotary body specified by the machining program to the safe rotation speed; and when the operator does not accept the safe rotation speed, stop the machining.

0023 As described above, the rotation speed is a factor affecting the machining accuracy such as surface roughness. Therefore, confirming with the operator whether or not the machining can be performed with the safe rotation speed will prevent a machined product from be defective.

0024 Further, the controller may be configured to be capable of newly setting the data on the inertia of the rotary body when the data on the inertia of the rotary body has not been set or when the set data on the inertia of the rotary body is determined to be an abnormal value. Furthermore, the controller may be configured to calculate and set the data on the inertia of the rotary body by causing the rotary body to perform the rotating operation and a stopping operation. This configuration enables the inertia of the rotary body to be accurately and automatically set.

Advantageous Effects of Invention

0025 In the present invention, as described above, when a rotation speed of the rotary body specified by the machining program exceeds the limit rotation speed that is set according to the inertia of the rotary body, the rotation speed of the rotary body is limited to the allowable rotation speed that is equal to or lower than the limit rotation speed. Consequently, a motor driving the rotary body is safely stopped by an appropriately provided emergency stop device in the event that the motor becomes uncontrollable due to power outage or any other cause. Besides, excessive loading on the motor in driving and stopping the rotary body is avoided.

0026 On the other hand, when the data on the inertia of the rotary body has not been set or when the set data on the inertia of the rotary body is determined to be an abnormal value, the rotation speed of the rotary body is limited to the safe rotation speed that has a sufficient margin such that the motor driving the rotary body is safely stopped by the appropriately provided emergency stop device in the event that the motor becomes uncontrollable due to power outage or any other cause. Consequently, the emergency stopping of the rotary body is safely carried out. Besides, excessive loading on the motor in driving and stopping the rotary body is avoided.

Brief Description of Drawings

0027

FIG. 1 is an illustrative diagram schematically illustrating a structure of a machine tool according to an embodiment of the present invention;

FIG. 2 is a block diagram schematically illustrating a configuration of the machine tool according to the embodiment;

FIG. 3 is a flowchart showing a process in a controller in the embodiment;

FIG. 4 is a flowchart showing the process in the controller in the embodiment;

FIG. 5 is a circuit diagram showing a motor circuit including an emergency stop circuit provided in a rotation control unit in the embodiment; and

FIG. 6 is a diagram showing a relationship between inertia and rotation speed for carrying out emergency stopping of a rotary body within a predetermined period of time. Description of Embodiments

0028 Hereinafter, a specific embodiment of the present invention will be described with reference to the drawings.

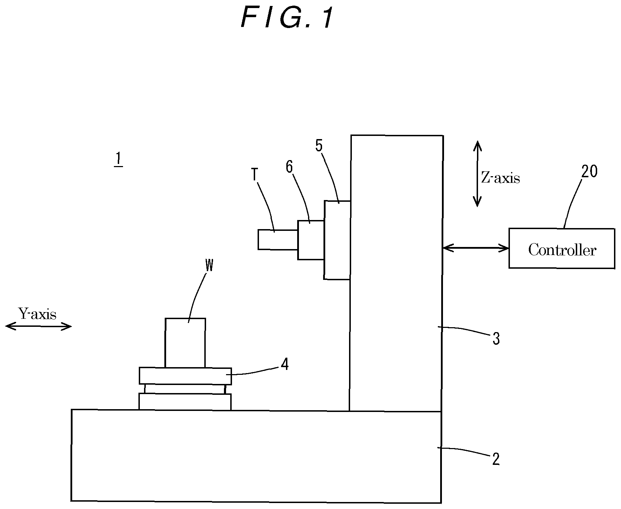

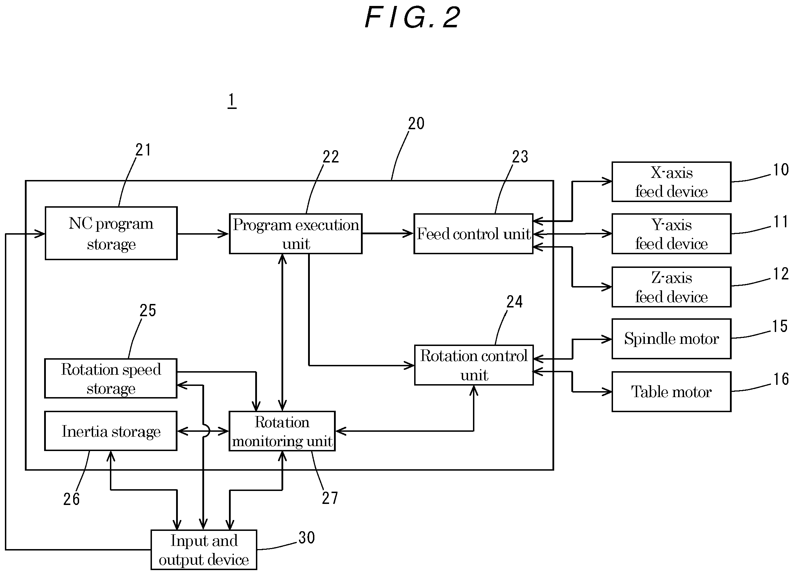

0029 As illustrated in FIGS. 1 and 2, a machine tool 1 according to this embodiment is a horizontal machining center. The machine tool 1 has a bed 2, a column 3 erected on the bed 2, a table 4 arranged on the bed 2, a spindle head 5 held by the column 3, a spindle 6 rotatably supported by the spindle head 5, a controller 20, and an input and output device 30. Needless to say, the present invention is not limited to application to a machine tool having such a structure and can be applied to various types of machine tools, such as a vertical machining center, a lathe, and a combined machine tool capable of turning and milling.

0030 A workpiece W is to be placed on the top of the table 4. The table 4 is driven by a Y-axis feed device 11 to move in a direction of Y-axis as a horizontal axis and is driven by an X-axis feed device 10 to move in a direction of X-axis as a horizontal axis orthogonal to the Y-axis. Further, the table 4 is driven by a table motor 16 to rotate about a vertical axis of rotation.

0031 The spindle head 5 is driven by a Z-axis feed device 12 to move in a direction of Z-axis as a vertical axis orthogonal to the X-axis and the Y-axis. A tool T is to be attached to the distal end of the spindle 6. The spindle 6 is driven by a spindle motor 15 to rotate about a horizontal axis of rotation.

0032 The operations of the X-axis feed device 10, Y-axis feed device 11, Z-axis feed device 12, spindle motor 15, and table motor 16 are controlled by the controller 20.

0033 In this machine tool 1, under control by the controller 20, the workpiece W is machined by the tool T by moving the table 4 and the workpiece W in the X-axis and Y-axis directions through the X-axis feed device 10 and the Y-axis feed device 11 with rotation of the table 4 stopped and moving the spindle 6 and the tool T in the Z-axis direction through the Z-axis feed device 12 with the spindle 6 and the tool T being rotated by the spindle motor 15. Further, the workpiece W is turned by the tool T by moving the table 4 and the workpiece W in the X-axis and Y-axis directions through the X-axis feed device 10 and the Y-axis feed device 11 with the table 4 being rotated and moving the spindle 6 and the tool T in the Z-axis direction through the Z-axis feed device 12 with rotation of the spindle 6 stopped.

0034 In the machine tool 1 according to this embodiment, the table 4, the X-axis feed device 10, the Y-axis feed device 11, the table motor 16, the spindle head 5, the spindle 6, and the Z-axis feed device 12 constitute a motion mechanism unit. Further, the tool T, a rotating part of the spindle 6, and a rotating part of the spindle motor 15 constitute a spindle rotary body, while the workpiece W, a rotating part of the table 4, and a rotating part of the table motor 16 constitute a table rotary body.

0035 The input and output device 30 has a display, which is, for example, composed of a touch panel, and an input and output interface for inputting and outputting data, etc. Needless to say, the display is used to display an image, text information, etc. thereon and is capable of input through a display unit thereof.

0036 As illustrated in FIG. 2, the controller 20 includes an NC program storage 21, a program execution unit 22, a feed control unit 23, a rotation control unit 24, a rotation speed storage 25, an inertia storage 26, and a rotation monitoring unit 27. The controller 20 is composed of a computer including a CPU, a RAM, and a ROM and appropriately configured electric circuit and electronic circuit or the like. The program execution unit 22, the feed control unit 23, the rotation control unit 24, and the rotation monitoring unit 27 are functionally implemented by a computer program and the electric circuit and electronic circuit or the like to execute the process described later. The NC program storage 21, the rotation speed storage 25, and the inertia storage 26 are composed of an appropriate storage medium such as a RAM.

0037 The NC program storage 21 is a functional unit that stores NC programs (machining programs) for NC control. The NC program storage 21 stores, for example, an NC program input through the input and output device 30.

0038 The program execution unit 22 sequentially reads the constituent blocks of an NC program to be executed selected from among the NC programs stored in the NC program storage 21 and processes an NC code contained in each block. In particular, when processing an NC code for feed control, the program execution unit 22 generates a control signal for the NC code and transmits the control signal to the feed control unit 23. When processing an NC code for rotation control, the program execution unit 22 generates a control signal for the NC code and transmits the control signal to the rotation control unit 24.

0039 The feed control unit 23 is a functional unit that controls the operations of the X-axis feed device 10, Y-axis feed device 11, and Z-axis feed device 12. Upon receiving a control signal for feed control from the program execution unit 22, the feed control unit 23 controls the corresponding one of the X-axis feed device 10, Y-axis feed device 11, and Z-axis feed device 12 such that it operates at a speed corresponding to the received control signal.

0040 The rotation control unit 24 is a functional unit that controls the rotating operations of the spindle motor 15 and table motor 16. Upon receiving a control signal for rotation control from the program execution unit 22, the rotation control unit 24 rotates the corresponding one of the spindle motor 15 and the table motor 16 with a rotation direction and a rotation speed corresponding to the received control signal.

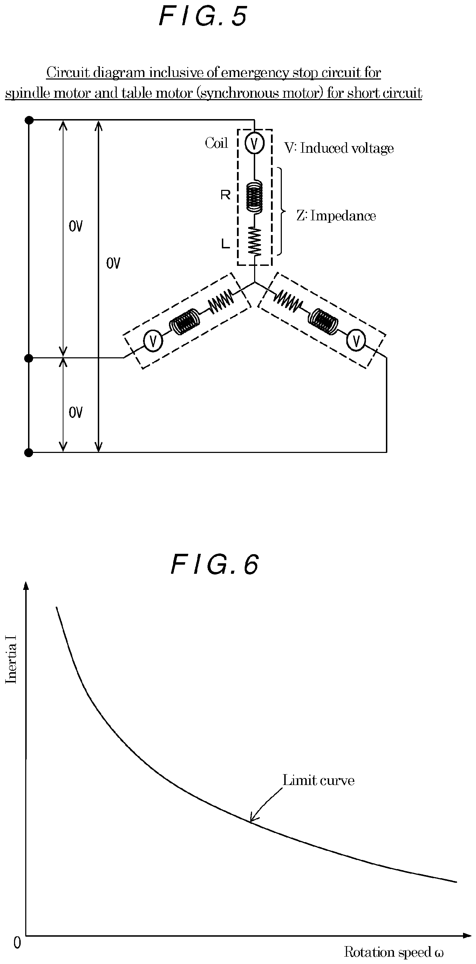

0041 The rotation control unit 24 includes emergency stop circuits for carrying out emergency stopping of the spindle motor 15 and the table motor 16 when the electricity supply to the spindle motor 15 and the table motor 16 is interrupted due to power outage or any other cause. These emergency stop circuits are respectively provided with respect to the spindle motor 15 and the table motor 16. These emergency stop circuits are respectively connected to the spindle motor 15 and the table motor 16 in the event of interruption of the electricity supply to form a short circuit as illustrated in FIG. 5.

0042 For instance, in the event of interruption of the electricity supply, the short circuit formed for the spindle motor 15 causes an induced current generated in the spindle motor 15 by idling of the spindle rotary body including the spindle motor 15 to flow into the coil, so that the rotational energy of the rotary body including the spindle motor 15 is converted into heat and thereby consumed (i.e., copper loss occurs). Thereby, the spindle motor 15 is stopped. The same applies to the table motor 16. In the event of interruption of the electricity supply, the short circuit formed for the table motor 16 causes an induced current generated in the table motor 16 by idling of the table rotary body including the table motor 16 to flow into the coil, so that the rotational energy of the rotary body including the table motor 16 is converted into heat and thereby consumed (i.e., copper loss occurs). Thereby, the table motor 16 is stopped.

0043 Note that the emergency stop circuits are not limited to such a circuit and may be, for example, a short circuit which is configured to, in the event of interruption of the electricity supply, short-circuit a power line of the spindle motor 15 or table motor 16 and a power line of an amplifier for driving the spindle motor 15 or table motor 16 so as to cause electricity to be consumed using only an internal resistance of the spindle motor 15 or table motor 16.

0044 The rotation speed storage 25 is a functional unit that stores an allowable rotation speed and a safe rotation speed set for the spindle rotary body constituted by the tool T, the rotating part of the spindle 6, and the rotating part of the spindle motor 15 and an allowable rotation speed and a safe rotation speed set for the table rotary body constituted by the workpiece W, the rotating part of the table 4, and the rotating part of the table motor 16. These allowable rotational speeds and safe rotational speeds are input through the input and output device 30 and stored into the rotation speed storage 25.

0045 The allowable rotation speed is a preset rotation speed that is equal to or lower than a limit rotation speed as an upper limit rotation speed for (safely) stopping the idling motor 15, 16 through the corresponding emergency stop circuit before the motor 15, 16 burns out. The allowable rotation speed is set according to the inertia of each rotary body (the spindle rotary body and the table rotary body).

0046 For instance, the allowable rotation speed set for the spindle rotary body including the spindle motor 15 is described here. The time $t_s$ [s] required to safely stop the spindle rotary body through the emergency stop circuit is calculated by Equation 1 below:

(Equation 1)

$$t_s = r_e/P_{loss},$$

where $r_e$ [J] is the rotational energy of the spindle rotary body and $P_{loss}$ [J/s] is the copper loss in the emergency stop circuit.

0047 The copper loss $P_{loss}$ [J/s] in the emergency stop circuit illustrated in FIG. 5 can be calculated by Equation 2 below:

(Equation 2)

$$P_{loss} = 3RI^2 = R \cdot (K \cdot \omega)^2/(R^2 + (\omega \cdot p \cdot L)^2),$$

where R is the resistance per phase [$\Omega$], L is the inductance per phase [H], K is the line-to-line induced voltage constant [Vrms/(rad/s)], $\omega$ is the rotational angular speed [rad/s] (the rotational angular speed is equivalent to the rotation speed [m/s]; therefore, the rotational angular speed is referred to as "rotation speed" hereinafter), and p is the number of pole pairs (1/2 of the number of poles).

0048 Further, the rotational energy $r_e$ can be represented by Equation 3 below:

(Equation 3)

$$r_e = (I \cdot \omega^2)/2,$$

where I is the inertia [kgm$^2$] of the spindle rotary body.

0049 Accordingly, the time $t_s$ [s] can be represented by Equation 4 below:

(Equation 4)

$$t_s = (I \cdot \omega_2)/(2 \cdot P_{loss}).$$

0050 The Equation 4 above can be transformed into Equation 5 below. Thereby, a relationship between the inertia I of the spindle rotary body and the rotation speed (i.e., the limit rotation speed) $\omega$ for stopping the spindle rotary body in the time $t_s$ is obtained.

(Equation 5)

$$I = 2 \cdot t_s \cdot P_{loss}/\omega^2$$

0051 The relationship between the inertia I of the spindle rotary body and the limit rotation speed $\omega$ can be represented by a limit curve as shown in FIG. 6. The rotation speed $\omega$ as situated below the limit curve with respect to the inertia I of the spindle rotary body allows the emergency stopping of the spindle rotary body to be safely carried out. The rotation speed $\omega$ as situated above the limit curve with respect to the inertia I of the spindle rotary body does not allow the spindle rotary body to be safely stopped.

0052 The allowable rotation speed for the spindle rotary body is previously set according to the inertia I of the spindle rotary body based on the thus-obtained limit rotation speed corresponding to the inertia I of the spindle rotary body so that it is equal to or lower than the limit rotation speed. The thus-set allowable rotation speed and the inertia of the spindle rotary body are associated with each other and stored in the form of a data table into the rotation speed storage 25. The same applies to the table rotary body including the table motor 16. The set allowable rotation speed and the inertia of the table rotary body are associated with each other and stored in the form of a data table into the rotation speed storage 25.

0053 Note that the inertia I [kgm$^2$] of each rotary body can be calculated by Equation 6 below:

$$\text{(Equation 6)}$$

$$I = (2P_{motor} \cdot t_{ac})/\omega^2,$$

where $t_{ac}$ [s] is the acceleration time of the motor 15, 16, $P_{motor}$ [w] is the output during acceleration of the motor 15, 16, and $\omega$ [rad/s] is the rotation speed.

0054 The safe rotation speed is a rotation speed having a sufficient margin such that the emergency stopping of the motor 15, 16 by the emergency stop circuit is safely carried out even when the inertia of the spindle rotary body or table rotary body is not known. The safe rotation speed is empirically set for each of the spindle rotary body and table rotary body and stored into the rotation speed storage 25.

0055 The inertia storage 26 is a functional unit that stores the inertia of the spindle rotary body and the inertia of the table rotary body. Where these inertias are known, the values thereof are input through the input and output device 30 and stored into the inertia storage 26.

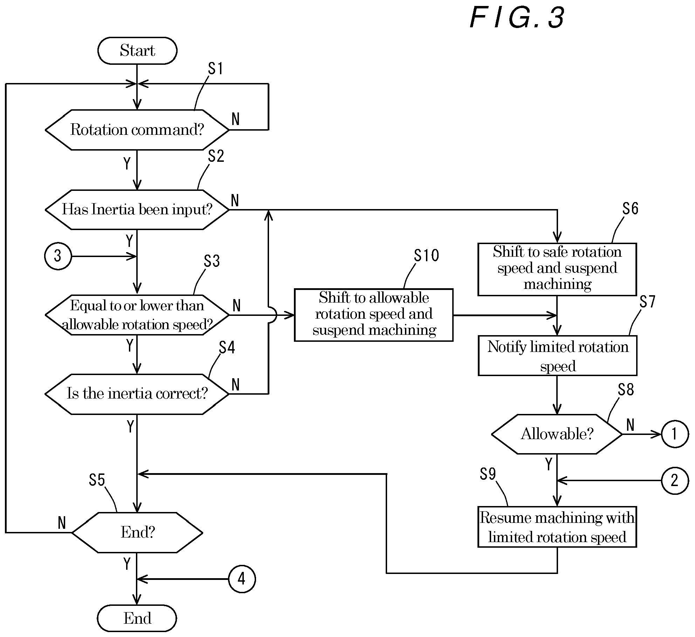

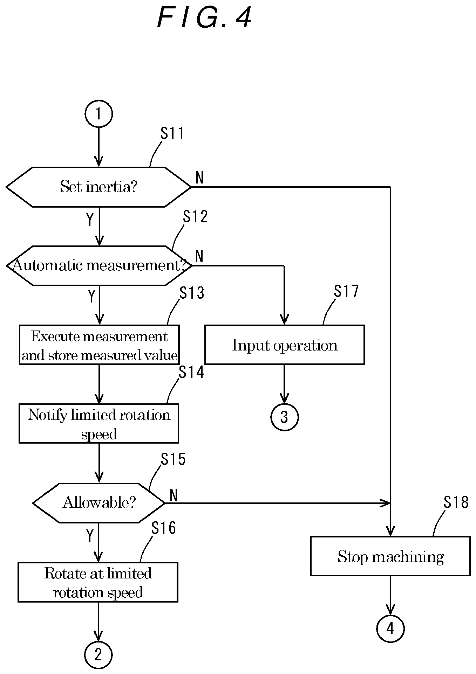

0056 The rotation monitoring unit 27 comes into operation in response to the process in the program execution unit 22 being started. The rotation monitoring unit 27 executes the process shown in FIGS. 3 and 4. Specifically, once the process in the program execution unit 22 is started, the rotation monitoring unit 27 first receives an NC code to be processed from the program execution unit 22 and recognizes (monitors) whether or not the received NC code relates to a rotation command (step S1). There are a rotation command for the spindle motor 15 and a rotation command for the table motor 16. The process for the spindle motor 15 is described representatively below; however, the same applies to the table motor 16. Note that the process for the table motor 16 is described in parentheses below.

0057 When a rotation command for the spindle motor 15 (the table motor 16) is confirmed in the step S1, the rotation monitoring unit 27 refers to the inertia storage 26 to confirm whether or not data on the inertia of the spindle rotary body (the table rotary body) is stored in the inertia storage 26 (step S2). When the data on the inertia is stored, the rotation monitoring unit 27 refers to the rotation speed storage 25 to check the allowable rotation speed set with respect to the inertia and determine whether or not the commanded rotation speed is equal to or lower than the allowable rotation speed (step S3).

0058 On the other hand, when it is confirmed in the step S2 that the data on the inertia is not stored, the rotation monitoring unit 27 reads out the safe rotation speed stored in the rotation speed storage 25 and transmits a control signal corresponding to the safe rotation speed to the rotation control unit 24, thereby causing the rotation control unit 24 to shift the rotation speed of the spindle motor 15 (the table motor 16) to the safe rotation speed. Further, the rotation monitoring unit 27 instructs the program execution unit 22 to suspend the processing of the NC program, i.e., to suspend the machining (step S6). Thereafter, the rotation monitoring unit 27 proceeds to step S7.

0059 When it is determined in the step S3 that the commanded rotation speed is not equal to or lower than the allowable rotation speed, the rotation monitoring unit 27 transmits a control signal corresponding to the allowable rotation speed to the rotation control unit 24, thereby causing the rotation control unit 24 to shift the rotation speed of the spindle motor 15 (the table motor 16) to the allowable rotation speed. Further, the rotation monitoring unit 27 instructs the program execution unit 22 to suspend the processing of the NC program, i.e., to suspend the machining (step S10). Thereafter, the rotation monitoring unit 27 proceeds to step S7.

0060 On the other hand, when it is determined in the step S3 that the commanded rotation speed is equal to or lower than the allowable rotation speed, the rotation monitoring unit 27 estimates the inertia of the spindle rotary body based on the actual driving power of the spindle motor 15 (the table motor 16) and determines based on the estimated inertia whether or not the inertia of the spindle rotary body (the table rotary body) stored in the inertia storage 26 is correct (step S4). When it is correct, the rotation monitoring unit 27 repeatedly executes the operations in the step S1 and subsequent steps until receiving a process end signal from the program execution unit 22 (step S5). That is to say, the rotation monitoring unit 27 executes the operations in the step S1 and subsequent steps every time receiving a rotation command from the program execution unit 22. On the other hand, when it is determined that the stored inertia is erroneous, the rotation monitoring unit 27 proceeds to the step S6.

0061 Note that the inertia of the spindle rotary body (the table rotary body) can be calculated (estimated) by the Equation 6 above. The rotation monitoring unit 27 obtains the actual acceleration time $t_{ac}$ [s] and output during

acceleration $P_{motor}$ [w] of the spindle motor 15 (the table motor 16) from the rotation control unit 24 to estimate the inertia of the spindle rotary body (the table rotary body).

0062 In step S7, the rotation monitoring unit 27 executes an operation of displaying the limited rotation speed on the display of the input and output device 30 to confirm with an operator whether to accept the limited rotation speed and resume the machining. When the operator selects through the display to accept the limited rotation speed and resume the machining (step S8), the rotation monitoring unit 27 transmits a machining resume signal to the program execution unit 22 with the rotation speed limited, thereby causing the program execution unit 22 to resume the machining (step S9). Thereafter, the rotation monitoring unit 27 proceeds to the step S5.

0063 On the other hand, when the operator selects through the display in the step S8 not to accept the limited rotation speed, the rotation monitoring unit 27 confirms with the operator through the display whether to newly set the inertia of the spindle rotary body (the table rotary body) (step S11). When the operator selects through the display to newly set the inertia, the rotation monitoring unit 27 further confirms with the operator through the display whether to automatically measure the inertia (step S12).

0064 When the operator selects through the display in the step S12 to newly automatically measure the inertia, the rotation monitoring unit 27 carries out automatic measurement of the inertia (step S13). The rotation monitoring unit 27 can carry out the automatic measurement by transmitting a stop signal to the rotation control unit 24 to suspend the rotation of the spindle motor 15 (the table motor 16) and then transmitting, for example, a control signal for rotating the spindle motor 15 (the table motor 16) at the safe rotation speed to rotate the spindle motor 15 (the table motor 16) at the safe rotation speed. Based on the actual acceleration time and output during acceleration of the spindle motor 15 (the table motor 16) obtained from the rotation control unit 24 in this process as well as the safe rotation speed, the inertia can be calculated by the Equation 6 above. Note that repeating this automatic measurement and averaging the data obtained will provide a more accurate inertia. The rotation monitoring unit 27 stores data on the calculated inertia into the inertia storage 26 (step S13).

0065 Subsequently, the rotation monitoring unit 27 refers to the inertia storage 26 to recognize the allowable rotation speed corresponding to the calculated inertia, and executes the operation of displaying the recognized allowable rotation speed on the display to confirm with the operator whether to accept the allowable rotation speed and resume the machining (step S14). When the operator selects through the display to accept the allowable rotation speed and resume the machining, the rotation monitoring unit 27 transmits a control signal for the allowable rotation speed to the rotation control unit 24, thereby causing the rotation control unit 24 to rotate the spindle motor 15 at the allowable rotation speed (step S16). Thereafter, the rotation monitoring unit 27 proceeds to the step S9 to cause the program execution unit 22 to resume the machining.

0066 On the other hand, when the operator selects through the display in the step S11 not to newly set the inertia and when the operator selects through the display in the step S15 not to accept the allowable rotation speed, the rotation monitoring unit 27 transmits a machining stop signal to the program execution unit 22 (step S18). Thereafter, the rotation monitoring unit 27 ends the process.

0067 When the operator selects through the display in the step S12 not to automatically measure the inertia, in other words, to manually input the inertia, the rotation monitoring unit 27 accepts input of the inertia through the display and stores data on the input inertia into the inertia storage 26 (step S17). Thereafter, the rotation monitoring unit 27 executes the operations in the step S3 and subsequent steps.

0068 In the machine tool 1 according to this embodiment having the above-described configuration, an NC program is executed by the program execution unit 22. Based on control signals from the program execution unit 22, the X-axis feed device 10, the Y-axis feed device 11, and the Z-axis feed device 12 are controlled by the feed control unit 23, while the spindle motor 15 and the table motor 16 are controlled by the rotation control unit 24. Thus, the X-axis feed device 10, the Y-axis feed device 11, the Z-axis feed device 12, the spindle motor 15, and the table motor 16 operate so that the workpiece W is machined by the tool T.

0069 The control of the rotations of the spindle motor 15 and table motor 16 by the rotation control unit 24 based on the control signals from the program execution unit 22 is monitored by the rotation monitoring unit 27.

0070 Specifically, every time the program execution unit 22 processes a rotation command, the rotation monitoring unit 27 confirms whether or not the inertia of the rotary body (the spindle rotary body or the table rotary body) corresponding to the rotation command is known (step S2). When the inertia is known, the rotation monitoring unit 27 determines whether or not the rotation command is equal to or lower than the allowable rotational speed set with respect to the inertia (step S3). When it is equal to or lower than the allowable rotational speed, the machining is continued. Therefore, in the event that the motor (the spindle motor 15 or the table motor 16) driving the rotary body becomes uncontrollable due to power outage or any other cause, the motor 15, 16 is safely stopped by the emergency stop circuit provided in the rotation control unit 24 without burning out. Further, performing the machining with such a rotation speed avoids excessive loading on the motor 15, 16 in driving and stopping the rotary body.

0071 Further, the rotation monitoring unit 27 is configured to, when the rotation command is equal to or lower than the allowable rotational speed set with respect to the inertia, compare the known inertia stored in the inertia storage 26 with the inertia estimated by actual rotation of the motor to determine whether or not the known inertia is correct (step S4); as a result, the machining is continued with the rotation speed unchanged only when the known inertia is correct. Therefore, the machining is prevented from being continued with the rotation speed of the motor 15, 16 set at a critical speed due to an erroneous input of the inertia.

0072 Further, the rotation monitoring unit 27 is configured to limit the rotation speed of the motor 15, 16 to the safe rotation speed when the inertia is not known (step S6) and to limit the rotation speed of the motor to the allowable rotation speed when the rotation command exceeds the allowable rotation speed set according to the inertia (step S10). Therefore, the motor is safely stopped by the emergency stop circuit without burning out in the emergency stopping.

0073 Further, the rotation monitoring unit 27 is configured to suspend the machining when the inertia is not known and when the rotation command exceeds the allowable rotation speed set according to the inertia (step S6 and step S10) and to resume the machining with the limited rotation speed when the operator accepts the limited rotation speed (steps S7 to S9). With the rotation speed limited, it is possible that a target machining accuracy, such as in surface roughness, is not achieved. However, confirming with the operator whether or not the machining can be performed with the limited rotation speed will prevent a machined product from being defective.

0074 Further, the rotation monitoring unit 27 is configured to be capable of automatic measurement of the inertia of the rotary body and capable of manual input of the inertia of the rotary body (steps S11 to S13 and S17). This realizes flexible setting of the inertia of the rotary body.

0075 The machine tool 1 according to this embodiment achieves the above-described effects. The monitoring by the machining monitoring unit 27 in this embodiment is useful especially for first time execution of an NC program. This is because of the following reasons: in first time execution of an NC program, it may be unclear whether the inertia of each rotary body is appropriately set, and further each commanded rotation speed may exceed the limit rotation speed set according to the inertia of the corresponding rotary body since it is set so as to satisfy a machining time and a machining accuracy.

0076 Above has been described an embodiment of the present invention. However, it should be noted that the present invention is not limited to the above-described embodiment and can be implemented in other manners.

0077 For example, the machine tool 1 in the above-described embodiment has both the spindle rotary body including the spindle motor 15 and the table rotary body including the table motor 16. However, the present invention is not limited to a machine tool having such a configuration and may be applied to a machine tool having either one of the spindle rotary body and table rotary body or a machine tool having a completely different rotary body.

0078 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims.

Reference Signs List

0079

| | |
|---|---|
| 1 | Machine tool |
| 2 | Bed |
| 3 | Column |
| 4 | Table |
| 5 | Spindle head |
| 6 | Spindle |
| 10 | X-axis feed device |
| 11 | Y-axis feed device |
| 12 | Z-axis feed device |
| 15 | Spindle motor |
| 16 | Table motor |
| 20 | Controller |
| 21 | NC program storage |
| 22 | Program execution unit |
| 23 | Feed control unit |
| 24 | Rotation control unit |
| 25 | Rotation speed storage |
| 26 | Inertia storage |
| 27 | Rotation monitoring unit |

30    Input and output device

**Claims**

1. A machine tool comprising:

   a motion mechanism unit including a rotary body to be controlled; and
   a controller configured to control at least a rotating operation of the rotary body in accordance with a machining program, **characterized in that**
   the controller is configured to: check data on an inertia of the rotary body when rotating the rotary body in accordance with the machining program; when the data on the inertia of the rotary body has been set, check whether or not a rotation speed of the rotary body specified by the machining program is equal to or lower than a limit rotation speed set according to the inertia of the rotary body; and when the rotation speed of the rotary body specified by the machining program exceeds the limit rotation speed, limit the rotation speed of the rotary body specified by the machining program using as an allowable rotation speed a preset rotation speed equal to or lower than the limit rotation speed.

2. The machine tool according to claim 1, **characterized in that** the controller is configured to: confirm whether or not an operator accepts the allowable rotation speed; when the operator accepts the allowable rotation speed, continue machining by limiting the rotation speed of the rotary body specified by the machining program to the allowable rotation speed; and when the operator does not accept the allowable rotation speed, stop the machining.

3. The machine tool according to claim 1 or 2, **characterized in that** the controller is configured to, when the data on the inertia of the rotary body has not been set or when the set data on the inertia of the rotary body is determined to be an abnormal value, limit the rotation speed of the rotary body specified by the machining program to a preset safe rotation speed.

4. The machine tool according to claim 3, **characterized in that** the controller is configured to: confirm whether or not an operator accepts the safe rotation speed; when the operator accepts the safe rotation speed, continue machining by limiting the rotation speed of the rotary body specified by the machining program to the safe rotation speed; and when the operator does not accept the safe rotation speed, stop the machining.

5. The machine tool according to claim 3 or 4, **characterized in that** the controller is configured to be capable of newly setting the data on the inertia of the rotary body when the data on the inertia of the rotary body has not been set or when the set data on the inertia of the rotary body is determined to be an abnormal value.

6. The machine tool according to claim 5, **characterized in that** the controller is configured to calculate and set the data on the inertia of the rotary body by causing the rotary body to perform the rotating operation and a stopping operation.

# FIG. 1

FIG.2

# FIG.3

Start

S1 Rotation command? — N

Y

S2 Has Inertia been input? — N

Y

③

S3 Equal to or lower than allowable rotation speed? — N

Y

S4 Is the inertia correct? — N

Y

S10 Shift to allowable rotation speed and suspend machining

S6 Shift to safe rotation speed and suspend machining

S7 Notify limited rotation speed

S8 Allowable? — N → ①

Y ← ②

S9 Resume machining with limited rotation speed

S5 End? — N

Y ← ④

End

# F I G. 4

## F I G. 5

Circuit diagram inclusive of emergency stop circuit for
spindle motor and table motor (synchronous motor) for short circuit

## F I G. 6

## INTERNATIONAL SEARCH REPORT

| International application No. |
|---|
| **PCT/JP2021/034491** |

### A. CLASSIFICATION OF SUBJECT MATTER

*G05B 19/19*(2006.01)i
FI: G05B19/19 X; G05B19/19 W

According to International Patent Classification (IPC) or to both national classification and IPC

### B. FIELDS SEARCHED

Minimum documentation searched (classification system followed by classification symbols)

G05B19/19

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2014-7816 A (FANUC LTD) 16 January 2014 (2014-01-16) paragraphs [0002], [0005], [0019]-[0036], [0042]-[0046], fig. 5-6 | 1 |
| A | | 2-6 |
| Y | JP 6839783 B1 (DMG MORI SEIKI CO LTD) 10 March 2021 (2021-03-10) paragraphs [0031]-[0043], [0047]-[0059], fig. 1-3 | 1 |
| A | | 2-6 |
| A | JP 2019-929 A (SUGINO MACH) 10 January 2019 (2019-01-10) paragraphs [0054]-[0055] | 4 |
| A | JP 5-138502 A (HITACHI SEIKO LTD) 01 June 1993 (1993-06-01) paragraphs [0020]-[0021], fig. 5-6 | 1–6 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **10 November 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/034491**

| Patent document cited in search report | | | Publication date (day/month/year) | Patent family member(s) | | | Publication date (day/month/year) |
|---|---|---|---|---|---|---|---|
| JP | 2014-7816 | A | 16 January 2014 | US | 8754601 | B2 | |
| | | | | column 3, line 61 to column 6, line 37, column 7, line 31 to column 8, line 16, fig. 5-6 | | | |
| | | | | DE | 102013010082 | A1 | |
| | | | | CN | 103516264 | A | |
| JP | 6839783 | B1 | 10 March 2021 | (Family: none) | | | |
| JP | 2019-929 | A | 10 January 2019 | (Family: none) | | | |
| JP | 5-138502 | A | 01 June 1993 | (Family: none) | | | |

Form PCT/ISA/210 (patent family annex) (January 2015)

17

**EP 4 394 532 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6285477 B